# EUROPEAN PATENT APPLICATION

(11) **EP 1 681 267 A1**
(43) Date of publication of application: **19.07.2006**
(21) Application number: 04788334.3
(22) Date of filing: 29.09.2004
(51) Int. Cl.: C01B 33/44

(54) **LAMELLAR ORGANIC SILICIC ACID AND METHOD FOR PRODUCING SAME**

(30) Priority: 30.09.2003 JP 2003341213
(71) Applicant: SHISEIDO COMPANY, LTD., Chuo-ku, Tokyo 104-8010 (JP)
(72) Inventor: TAKAHASHI, S., Shiseido Res. Center(Shin-Yokohama), Yokohama-shi, Kanagawa 224-8558 (JP)
(74) Representative: Merkle, Gebhard
(86) International application number: PCT/JP2004/014268
(87) International publication number: WO 2005/030645

(57) **Abstract**

A layer organic silicic acid which can improve an adsorbing power to an alcohol and separate a general organic compound and a method of producing the layer organic silicic acid are provided. In a layer organic silicic acid in which a substituted silyl group bonds to a layer polysilicic acid, the substituted silyl group has an alkyl group and the alkyl group has a substituent bonding to the terminal of the alkyl group and selected from the group consisting of an amino group, an expoxyethyl group, an epoxyethyloxy group, a vinyl group, an isopropenyl group, a 1-phenylvinyl group, a 4-vinylphenyl group, an isocyanate group and a hydroxyl group. The layer organic silicic acid is obtained by silylating a layer polysilicate salt with a silane compound.

## Description

### TECHNICAL FIELD

The present invention relates to a layer organic silicic acid and a method of producing a layer organic silicic acid.

### BACKGROUND ART

A layer organic silicic acid is a compound in which a silyl group having an alkyl group bonds to the oxygen atom of a silanol group (≡Si-OH) of a layer poly(silicic acid) and an application thereof is expected in various technical fields. As an example of the layer organic silicic acid, a porous layer poly(silicic acid) that adsorbs alcohols selectively is disclosed in a patent document (for example, see JP-A-2000-128521). In the porous layer poly(silicic acid), a silyl group having one alkyl group in which the number of carbons in a linear portion thereof are 6 to 20 and one or two hydroxyl groups bond to a layer of the layer poly(silicic acid). More particularly, the layer poly(silicic acid) is kanemite, KHSi₂O₅, makatite, magadiite, or kenyaite, and the silyl group having one alkyl group in which the number of carbons in a linear portion thereof are 6 to 20 and one or two hydroxyl groups is a silyl group represented by the formula: 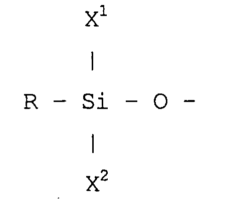 , in which formula R is an alkyl group in which the number of carbons are 6 to 20, X¹ is a hydroxyl group, and X² is selected among a hydroxyl group, a halogen atom, an alkoxy group in which the number of carbons are equal to or less than 2, and an alkyl group in which the number of carbon(s) is 1 to 8. That is, the porous layer poly(silicic acid) is a layer organic silicic acid in which a silyl group having one or two hydroxyl groups and one alkyl group bonds to a layer of a layer poly(silicic acid) .

Also, as a method for producing the porous layer poly(silicic acid), there is disclosed a method that includes the first process of introducing a quaternary alkyl ammonium salt, an alkylamine, or an alkylphosphonium salt into a layer silicate salt by means of ion exchange, the second process of bonding a silane compound to a layer of a layer silicic acid through exchange reaction with a quaternary alkyl ammonium salt, an alkylamine, or an alkylphosphonium salt in a solution that contains a two or three functional alkylsilane represented by RSiX₃₋ₐYₐ (R is an alkyl group in which the number of carbon atoms are 6 to 20, X is a halogen atom or alkoxy group in which the number of carbons are 2 or less, Y is an alkyl group in which the number of carbons are 1 to 8, and a is 0 or 1.), and the third process of silanolating a residual X group of the two or three functional alkylsilane in water or a mixed liquid of water/organic solvent.

However, the layer organic silicic acid adsorbs alcohols selectively but the adsorbing power for an organic compound except alcohols is not sufficient. It is desired that a separation medium for separating various organic compounds has characteristics of selectively adsorbing not only alcohols but also organic compounds except alcohols, but the adsorbing power of the layer organic silicic acid with respect to organic compounds except alcohols is not sufficient.

### DISCLOSURE OF THE INVENTION

### PROBLEMS TO BE SOLVED BY THE INVENTION

The object of the present invention is to provide a layer organic silicic acid that can improve the adsorbing power thereof to an alcohol and separate a general organic compound and a method of producing the layer organic silicic acid.

### MEANS FOR SOLVING THE PROBLEM

The first aspect of the present invention is a layer organic silicic acid in which a substituted silyl group bonds to a layer poly(silicic acid), characterized in that the substituted silyl group has an alkyl group and the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

According to the first aspect of the present invention, a layer organic silicic acid that can improve the adsorbing power thereof to an alcohol and separate a general organic compound can be provided, since the substituted silyl group has an alkyl group and the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

The second aspect of the present invention is a layer organic silicic acid according to the fist aspect of the present invention, characterized in that a number of carbon atom(s) contained in the alkyl group is equal to or greater than 3 and equal to or less than 18.

According to the second aspect of the present invention, a layer organic silicic acid that can more improve the adsorbing power thereof to an alcohol and more efficiently separate a general organic compound can be provided, since a number of carbon atom(s) contained in the alkyl group is equal to or greater than 3 and equal to or less than 18.

The third aspect of the present invention is a layer organic silicic acid in which a substituted silyl group bonds to a layer poly(silicic acid), characterized in that the substituted silyl group has an alkylene group, the alkylene group has an atom group bonding to the alkylene group and selected from the group consisting of an amide bond, an ester bond, an N-oxynethyleneamino group and an N,N'-di(oxymethylene)amino group, and the atom group has an alkyl group.

According to the third aspect of the present invention, a layer organic silicic acid that can improve the adsorbing power thereof to an alcohol and separate a general organic compound can be provided, since the substituted silyl group has an alkylene group, the alkylene group has an atom group bonding to the alkylene group and selected from the group consisting of an amide bond, an ester bond, an N-oxynethyleneamino group and an N,N'-di(oxymethylene)amino group, and the atom group has an alkyl group.

The forth aspect of the present invention is a layer organic silicic acid according to the third aspect of the present invention, characterized in that the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

According to the fourth aspect of the present invention, a layer organic silicic acid that can more improve the adsorbing power thereof to an alcohol and more efficiently separate a general organic compound can be provided, since the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

The fifth aspect of the present invention is a layer organic silicic acid according to the third or fourth aspect of the present invention, characterized in that a total of a number of carbon atom(s) contained in the alkyl group and a number of carbon atom(s) contained in the alkylene group is equal to or greater than 3 and equal to or less than 18.

According to the fifth aspect of the present invention, a layer organic silicic acid that can more improve the adsorbing power thereof to an alcohol and more efficiently separate a general organic compound can be provided, since a total of a number of carbon atom(s) contained in the alkyl group and a number of carbon atom(s) contained in the alkylene group is equal to or greater than 3 and equal to or less than 18.

The sixth aspect of the present invention is a method of producing a layer organic silicic acid for obtaining an layer organic silicic acid by silylating a layer polysilicate salt with a silane compound, characterized in that the silane compound has an alkyl group and the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

According to the sixth aspect of the present invention, a method of producing a layer organic silicic acid that can improve the adsorbing power thereof to an alcohol and separate a general organic compound can be provided, since the silane compound has an alkyl group and the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

The seventh aspect of the present invention is a method of producing a layer organic silicic acid according to the sixth aspect of the present invention, characterized in that a total of a number of carbon atom(s) contained in the alkyl group and a number of carbon atom(s) contained in the alkylene group is equal to or greater than 3 and equal to or less than 18.

According to the seventh aspect of the present invention, a method of producing a layer organic silicic acid that can more improve the adsorbing power thereof to an alcohol and more efficiently separate a general organic compound can be provided, since a total of a number of carbon atom(s) contained in the alkyl group and a number of carbon atom(s) contained in the alkylene group is equal to or greater than 3 and equal to or less than 18.

The eighth aspect of the present invention is a method of producing a layer organic silicic acid for obtaining an layer organic silicic acid by silylating a layer polysilicate salt with a silane compound, characterized in that the silane compound has an alkylene group, the alkylene group has an atom group bonding to the alkylene group and selected from the group consisting of an amide bond, an ester bond, an N-oxynethyleneamino group and an N,N'-di(oxymethylene)amino group, and the atom group has an alkyl group.

According to the eight aspect of the present invention, a method of producing a layer organic silicic acid that can improve the adsorbing power thereof to an alcohol and separate a general organic compound can be provided, since the silane compound has an alkylene group, the alkylene group has an atom group bonding to the alkylene group and selected from the group consisting of an amide bond, an ester bond, an N-oxynethyleneamino group and an N,N'-di(oxymethylene)amino group, and the atom group has an alkyl group.

The ninth aspect of the present invention is a method of producing a layer organic silicic acid according to the eighth aspect of the present invention, characterized in that the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

According to the ninth aspect of the present invention, a method of producing a layer organic silicic acid that can more improve the adsorbing power thereof to an alcohol and more efficiently separate a general organic compound can be provided, since the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

The tenth aspect of the present invention is a method of producing a layer organic silicic acid according to the eighth or ninth aspect of the present invention, characterized in that a total of a number of carbon atom(s) contained in the alkyl group and a number of carbon atom(s) contained in the alkylene group is equal to or greater than 3 and equal to or less than 18.

According to the tenth aspect of the present invention, a method of producing a layer organic silicic acid that can further improve the adsorbing power thereof to an alcohol and further efficiently separate a general organic compound can be provided, since a total of a number of carbon atom(s) contained in the alkyl group and a number of carbon atom(s) contained in the alkylene group is equal to or greater than 3 and equal to or less than 18.

The eleventh aspect of the present invention is a method of producing a layer organic silicic acid for obtaining a layer organic silicic acid in which a layer polysilicate salt is silylated with a silane compound, characterized by comprising a step of silylating a layer polysilicate salt with a silane compound having an alkylene group bonding to an amino group and a step of reacting a compound having a carboxyl group or an epoxyethyl group with the amino group.

According to the eleventh aspect of the present invention, a method of producing a layer organic silicic acid that can improve the adsorbing power thereof to an alcohol and separate a general organic compound can be provided, because of comprising a step of silylating a layer polysilicate salt with a silane compound having an alkylene group bonding to an amino group and a step of reacting a compound having a carboxyl group or an epoxyethyl group with the amino group.

The twelfth aspect of the present invention is a method of producing a layer organic silicic acid for obtaining a layer organic silicic acid in which a layer polysilicate salt is silylated with a silane compound, characterized by comprising a step of silylating a layer polysilicate salt with a silane compound having an alkylene group bonding to a hydroxyl group and a step of reacting a compound having a carboxyl group with the hydroxyl group.

According to the twelfth aspect of the present invention, a method of producing a layer organic silicic acid that can improve the adsorbing power thereof to an alcohol and separate a general organic compound can be provided, because of comprising a step of silylating a layer polysilicate salt with a silane compound having an alkylene group bonding to a hydroxyl group and a step of reacting a compound having a carboxyl group with the hydroxyl group.

ADVANTAGEOUS EFFECT OF THE INVENTION

According to the present invention, there can be provided a layer organic silicic acid that can improve the adsorbing power thereof to an alcohol and separate a general organic compound and a method of producing the layer organic silicic acid.

### BRIEF DESCRIPTION OF THE DRAWINGS

FIG. 1 is a diagram illustrating a layer organic silicic acid according to the first embodiment of the present invention.
FIG. 2 is a diagram illustrating a layer organic silicic acid according to the second embodiment of the present invention.
FIG. 3A is a diagram illustrating a layer organic silicic acid according to the third embodiment of the present invention.
FIG. 3B is a diagram illustrating a layer organic silicic acid according to the third embodiment of the present invention.
FIG. 4A is a diagram illustrating a silane compound used in a method of producing a layer organic silicic acid according to the present invention.
FIG. 4B is a diagram illustrating a silane compound used in a method of producing a layer organic silicic acid according to the present invention.
FIG. 4C is a diagram illustrating a silane compound used in a method of producing a layer organic silicic acid according to the present invention.
FIG. 5A is a diagram illustrating a method of producing a layer organic silicic acid according to the present invention.
FIG. 5B is a diagram illustrating a method of producing a layer organic silicic acid according to the present invention.
FIG. 5C is a diagram illustrating a method of producing a layer organic silicic acid according to the present invention.
FIG. 5D is a diagram illustrating a method of producing a layer organic silicic acid according to the present invention.
FIG. 6A is a diagram illustrating a silane compound used in the first example of the present invention.
FIG. 6B is a diagram illustrating a layer organic silicic acid synthesized in the first example of the present invention.

### BEST MODE FOR CARRYING OUT THE INVENTION

Next, the embodiments of the present invention are described with reference to the drawings.

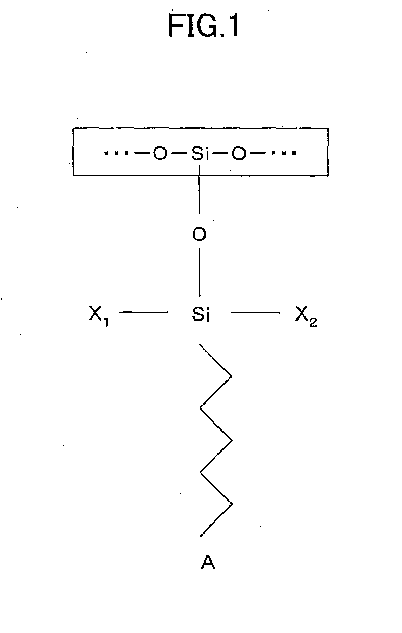

First, a layer organic silicic acid according to the first embodiment of the present invention is described with reference to FIG. 1. In the layer organic silicic acid according to the first embodiment of the present invention, a substituted silyl group bonds to a layer poly(silicic acid) that is a kind of clay minerals. That is, it is a layer poly(silicic acid) silylated with a silane compound. The layer poly(silicic acid) is a compound having a silanol group (≡Si-OH) on plural layer surfaces thereof (with a composition formula of SiO₂) which are formed by bonding Si and 0 to each other. Also, it is preferable that a silanol group exists between layers of a layer poly(silicic acid).

The substituted silyl group bonds to at least one of oxygen atoms of those silanol groups (≡Si-OH) contained in the layer poly(silicic acid). Herein, the substituted silyl group is an organic group in which a hydrogen atom of a silyl group (-SiH₃) is replaced by a particular substituent as described below.

The substituted silyl group has at least one (one or more and three or less) alkyl group. That is, at least one (one or more and three or less) of hydrogen atoms of the silyl group is replaced by an alkyl group. Also, each alkyl group may be either a linear alkyl group or a branched alkyl group. Specifically, each alkyl group is selected from the group consisting of a methyl group and an ethyl group and, linear and branched, propyl groups, butyl groups, pentyl groups, hexyl groups, heptyl groups, octyl groups, nonyl groups, decyl groups, undecyl groups, dodecyl groups, tridecyl groups, tetradecyl groups, pentadecyl groups, hexadecyl groups, heptadecyl groups, octadecyl groups, nonadecyl groups, and icosyl groups.

Further, each alkyl group has a substituent bonding to a terminal of the alkyl group which terminal is at the opposite side of a silicon atom of the substituted silyl group (a carbon atom at the terminal of the alkyl group is substituted with a substituent), and each substituent is selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

On the other hand, each hydrogen atom of the silyl group which atom is not replaced by the alkyl group is replaced by a substituent selected from the group consisting of a hydroxyl group, a chloro group, a methyl group, an ethyl group, a methoxy group, and an ethoxy group, or is a single bond to the oxygen atom of another silanol group that is adjacent to the slianol group to which the substituted silyl group bonds.

In the layer organic silicic acid according to the first embodiment of the present invention, the substituent bonding to the terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group acts as a functional group for adsorbing various organic compounds including alcohols. Therefore, the substituent bonding to the terminal of the alkyl group is selected depending to an organic compound to be adsorbed. Also, since the substituent does not directly bond to a silicon atom of the substituted silyl group but bond to the terminal of the alkyl group which terminal is at the opposite side of a silicon atom of the substituted silyl group, the substituent is not shielded by the alkyl group and the possibility of interacting an objective organic compound with the substituent (adsorbing an objective organic compound on the substituent) becomes higher. Therefore, the objective organic compound can be more easily adsorbed on the substituted silyl group. As a result, a layer organic silicic acid according to the first embodiment of the present invention can improve the adsorbing power thereof to alcohols and can separate various organic compounds.

Additionally, the number of carbon atom(s) contained in each alkyl group bonding to a silicon atom of the silyl group is preferably equal to or greater than 3 and equal to or less than 18. Herein, if the number of carbon atom(s) contained in the alkyl group is less than 3, the length of the alkyl group contained in the substituted silyl group is small and the space between layers of the layer poly(silicic acid) does not sufficiently increase. Accordingly, an organic compound such as alcohols is difficult to enter the space between layers of the layer poly(silicic acid) and an objective organic compound is difficult to sufficiently interact with a substituent of the alkyl group of the substituted silyl group. As a result, the objective organic compound is difficult to be sufficiently adsorbed on the substituted silyl group. On the other hand, if the number of carbon atoms contained in the alkyl group is greater than 18, the length of the alkyl group contained in the substituted silyl group is large and the rate of space occupied by one substituted silyl group in the space between layers of the layer poly(silicic acid) becomes higher. Accordingly, the number of substituted silyl group(s) bonding to a layer of the layer poly(silicic acid) decreases. That is, the number of substituent(s) of an alkyl group that interacts with (adsorbs) an objective organic compound in the space between layers of the layer poly(silicic acid) also decreases. Also, the substituent of the alkyl group is shielded by the long alkyl group and the objective organic compound is difficult to sufficiently interact with a substituent of the alkyl group of the substituted silyl group. As a result, the objective organic compound is difficult to be sufficiently adsorbed on the substituted silyl group. That is, the number of carbon atoms contained in the alkyl group is equal to or greater than 3 and equal to or less than 18, whereby an objective organic compound can efficiently interact with the substituted silyl group and be sufficiently adsorbed on the substituted silyl group.

An example of the layer organic silicic acid according to the first embodiment of the present invention is illustrated in FIG. 1. In FIG. 1, a layer organic poly (silicic acid) is represented by ···-O-Si-O-··· and a silanol group substituted with a substituted silyl group is represented by Si-O-. In FIG. 1, the substituted silyl group has one alkyl group and the alkyl group is represented by one polygonal line wherein the vertexes of the polygonal line represent methylene groups (-CH₂-). That is, the alkyl group in FIG. 1 represents a linear pentyl group. Herein, the carbon atom at the terminal of the alkyl group is substituted with a substituent A and the substituent A is selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group. Also, the substituted silyl group has substituents X₁ and X₂ except an alkyl group and each of the substituents X₁ and X₂ is substituted with a substituent selected from the group consisting of a hydroxyl group, a chloro group, a methyl group, an ethyl group, a methoxy group and an ethoxy group or is a single bond to an oxygen atom of another silanol group that is adjacent to the silanol group to which the substituted silyl group bonds.

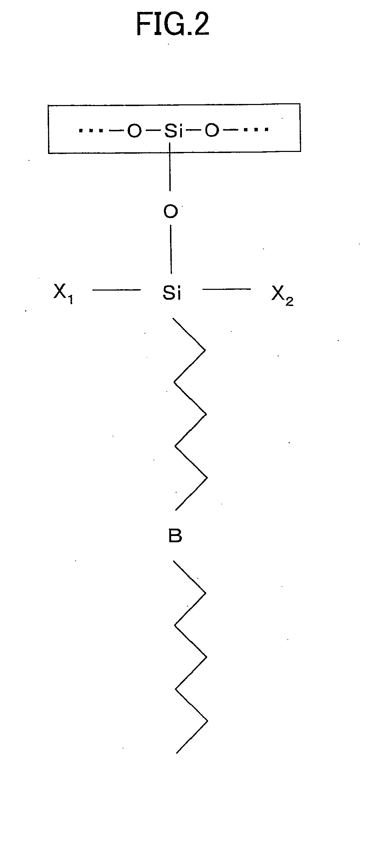

Next, a layer organic silicic acid according to the second embodiment of the present invention is described with reference to FIG. 2. In the layer organic silicic acid according to the second embodiment of the present invention, a substituted silyl group bonds to a layer poly(silicic acid) that is a kind of clay minerals. That is, it is a layer poly(silicic acid) silylated with a silane compound. The layer poly(silicic acid) is a compound having a silanol group (≡Si-OH) on plural layer surfaces thereof (with a composition formula of SiO₂) which are formed by bonding Si and O to each other. Also, it is preferable that a silanol group exists between layers of a layer poly(silicic acid).

The substituted silyl group bonds to at least one of oxygen atoms of those silanol groups (≡Si-OH) contained in the layer poly(silicic acid). Herein, the substituted silyl group is an organic group in which a hydrogen atom of a silyl group (-SiH₃) is replaced by a particular substituent as described below.

The substituted silyl group has at least one (one or more and three or less) alkylene group. That is, at least one (one or more and three or less) of hydrogen atoms of the silyl group is replaced by an alkylene group. Also, each alkylene group may be either a linear alkylene group or a branched alkylene group. Specifically, each alkylene group is selected from the group consisting of a methylene group and an ethylene group and, linear and branched, trimethylene groups, tetramethylene groups, pentamethylene groups, hexamethylene groups, heptamethylene groups, octamethylene groups, nonamethylene groups, decamethylene groups, undecamethylene groups, dodecamethylene groups, tridecamethylene groups, tetradecamethylene groups, pentadecamethylene groups, hexadecamethylene groups, heptadecamethylene groups, octadecamethylene groups, nonadecamethylene groups, and icosamethylene groups.

Further, each alkylene group has an atom group bonding to a terminal of the alkylene group which terminal is at the opposite side of a silicon atom of the substituted silyl group and each atom group is selected from the group consisting of an amide bond, an ester bond, an N-oxymethyleneamino group (-OCH₂NH-) and an N,N'-di(oxymethylene)amino group ((-OCH₂)₂N-).

Also, the atom group has at least one (one or more and two or less) alkyl group. That is, at least one (one or more and two or less) of the valences of the atom group is substituted with an alkyl group. Also, each alkyl group may be either a linear alkyl group or a branched alkyl group. Specifically, each alkyl group is selected from the group consisting of a methyl group and an ethyl group and, linear and branched, propyl groups, butyl groups, pentyl groups, hexyl groups, heptyl groups, octyl groups, nonyl groups, decyl groups, undecyl groups, dodecyl groups, tridecyl groups, tetradecyl groups, pentadecyl groups, hexadecyl groups, heptadecyl groups, octadecyl groups, nonadecyl groups, and icosyl groups.

Additionally, each of plural valences of the atom group may bond to either the alkyl group or the alkylene group.

On the other hand, each hydrogen atom of the silyl group which atom is not replaced by the alkylene group is replaced by a substituent selected from the group consisting of a hydroxyl group, a chloro group, a methyl group, an ethyl group, a methoxy group, and an ethoxy group, or is a single bond to the oxygen atom of another silanol group that is adjacent to the slianol group to which the substituted silyl group bonds.

In the layer organic silicic acid according to the second embodiment of the present invention, the atom group existing between the alkylene group and the alkyl group and selected from the group consisting of an amide bond, an ester bond, an N-oxymethyleneamino group, and an N,N'-di(oxymethylene)amino group acts as a functional group for adsorbing various organic compounds including alcohols. Therefore, the atom group existing between the alkylene group and the alkyl group is selected depending to an organic compound to be adsorbed. Also, since the atom group does not directly bond to a silicon atom of the substituted silyl group, the atom group is not shielded by the alkyl group or the alkylene group and the possibility of interacting an objective organic compound with the atom group (adsorbing an objective organic compound on the atom group) becomes higher. Therefore, the objective organic compound can be more easily adsorbed on the substituted silyl group. As a result, a layer organic silicic acid according to the first embodiment of the present invention can improve the adsorbing power thereof to alcohols and can separate various organic compounds.

Additionally, the total of the number of carbon atom(s) contained in one alkyl group bonding to the atom group and the number of carbon atom(s) contained in one alkylene group bonding to a silicon atom of the silyl group is preferably equal to or greater than 3 and equal to or less than 18. Herein, if the total of the number of carbon atom(s) contained in the alkyl group and the number of carbon atom(s) contained in the alkylene group is less than 3, the total length of the alkyl group and alkylene group contained in the substituted silyl group is small and the space between layers of the layer poly(silicic acid) does not sufficiently increase. Accordingly, an organic compound such as alcohols is difficult to enter the space between layers of the layer poly(silicic acid) and an objective organic compound is difficult to sufficiently interact with the atom group contained in the substituted silyl group. As a result, the objective organic compound is difficult to be sufficiently adsorbed on the substituted silyl group. On the other hand, if the total of the number of carbon atom(s) contained in the alkyl group and the number of carbon atom(s) contained in the alkylene group is greater than 18, the total length of the alkyl group and alkylene group contained in the substituted silyl group is large and the rate of space occupied by one substituted silyl group in the space between layers of the layer poly(silicic acid) becomes higher. Accordingly, the number of substituted silyl group(s) bonding to a layer of the layer poly(silicic acid) decreases. That is, the number of the atom group(s) contained in the substituted silyl group that interacts with (adsorbs) an objective organic compound in the space between layers of the layer poly(silicic acid) also decreases. Also, the atom group contained in the substituted silyl group is shielded by the long alkyl chains of the alkyl group and alkylene group and the objective organic compound is difficult to sufficiently interact with the atom group contained in the substituted silyl group. As a result, the objective organic compound is difficult to be sufficiently adsorbed on the substituted silyl group. That is, the total of the number of carbon atom(s) contained in the one alkyl group and the number of carbon atom(s) contained in the one alkylene group is equal to or greater than 3 and equal to or less than 18, whereby an objective organic compound can efficiently interact with the substituted silyl group and be sufficiently adsorbed on the substituted silyl group.

An example of the layer organic silicic acid according to the second embodiment of the present invention is illustrated in FIG. 2. In FIG. 2, a layer organic poly(silicic acid) is represented by ···-O-Si -O-··· and a silanol group substituted with a substituted silyl group is represented by Si-O-. In FIG. 2, the substituted silyl group has one alkylene group and the alkylene group is represented by one polygonal line wherein the vertexes of the polygonal line represent methylene groups (-CH₂-). That is, the alkylene group in FIG. 2 represents a linear pentamethylene group. Herein, an atom group B bonds to the carbon atom at the terminal of the alkylene group and the atom group B is selected from the group consisting of an amide bond, an ester bond, an N-oxymethyleneamino group, and an N,N'-di(oxymethylene)amino group. Also, in FIG. 2, the atom group B has one alkyl group and the alkyl group is represented by one polygonal line wherein the vertexes of the polygonal line represent methylene groups (-CH₂-). That is, the alkyl group in FIG. 2 represents a linear hexyl group. Also, the substituted silyl group has substituents X₁ and X₂ except an alkyl group and each of the substituents X₁ and X₂ is substituted with a substituent selected from the group consisting of a hydroxyl group, a chloro group, a methyl group, an ethyl group, a methoxy group and an ethoxy group or is a single bond to an oxygen atom of another silanol group that is adjacent to the silanol group to which the substituted silyl group bonds.

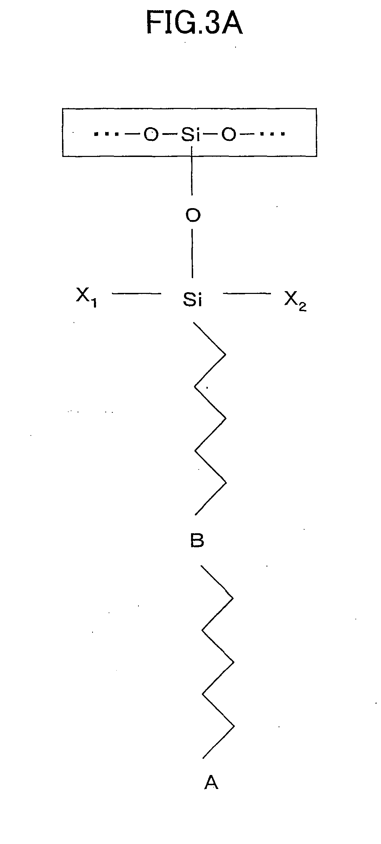

Next, a layer organic silicic acid according to the third embodiment of the present invention is described with reference to FIG. 3A and FIG. 3B. In the layer organic silicic acid according to the third embodiment of the present invention, a substituted silyl group bonds to a layer poly(silicic acid) that is a kind of clay minerals. That is, it is a layer poly(silicic acid) silylated with a silane compound. The layer poly(silicic acid) is a compound having a silanol group (≡Si-OH) on plural layer surfaces thereof (with a composition formula of SiO₂) which are formed by bonding Si and O to each other. Also, it is preferable that a silanol group exists between layers of a layer poly(silicic acid).

The substituted silyl group bonds to at least one of oxygen atoms of those silanol groups (≡Si-OH) contained in the layer poly(silicic acid). Herein, the substituted silyl group is an organic group in which a hydrogen atom of a silyl group (-SiH₃) is replaced by a particular substituent as described below.

The substituted silyl group has at least one (one or more and three or less) alkylene group. That is, at least one (one or more and three or less) of hydrogen atoms of the silyl group is replaced by an alkylene group. Also, each alkylene group may be either a linear alkylene group or a branched alkylene group. Specifically, each alkylene group is selected from the group consisting of a methylene group and an ethylene group and, linear and branched, trimethylene groups, tetramethylene groups, pentamethylene groups, hexamethylene groups, heptamethylene groups, octamethylene groups, nonamethylene groups, decamethylene groups, undecamethylene groups, dodecamethylene groups, tridecamethylene groups, tetradecamethylene groups, pentadecamethylene groups, hexadecamethylene groups, heptadecamethylene groups, octadecamethylene groups, nonadecamethylene groups, and icosamethylene groups.

Further, each alkylene group has an atom group bonding to a terminal of the alkylene group which terminal is at the opposite side of a silicon atom of the substituted silyl group and each atom group is selected from the group consisting of an amide bond, an ester bond, an N-oxymethyleneamino group (-OCH₂NH-) and an N,N'-di(oxymethylene)amino group ((-OCH₂)₂N-).

Also, the atom group has at least one (one or more and two or less) alkyl group. That is, at least one (one or more and two or less) of the valences of the atom group is substituted with an alkyl group. Also, each alkyl group may be either a linear alkyl group or a branched alkyl group. Specifically, each alkyl group is selected from the group consisting of a methyl group and an ethyl group and, linear and branched, propyl groups, butyl groups, pentyl groups, hexyl groups, heptyl groups, octyl groups, nonyl groups, decyl groups, undecyl groups, dodecyl groups, tridecyl groups, tetradecyl groups, pentadecyl groups, hexadecyl groups, heptadecyl groups, octadecyl groups, nonadecyl groups, and icosyl groups.

Additionally, each of plural valences of the atom group may bond to either the alkyl group or the alkylene group.

Further, each alkyl group has a substituent bonding to a terminal of the alkyl group which terminal is at the opposite side of the atom group (a carbon atom at the terminal of the alkyl group is substituted with a substituent), and each substituent is selected from the group consisting of an amino group, an epoxyethyl group, an epoxyethyloxy group, a vinyl group, an isopropenyl group, a 1-phenylvinyl group, 4-vinylphenyl group, an isocyanate group and a hydroxyl group.

On the other hand, each hydrogen atom of the silyl group which atom is not replaced by the alkylene group is replaced by with a substituent selected from the group consisting of a hydroxyl group, a chloro group, a methyl group, an ethyl group, a methoxy group, and an ethoxy group, or is a single bond to the oxygen atom of another silanol group that is adjacent to the slianol group to which the substituted silyl group bonds.

In the layer organic silicic acid according to the third embodiment of the present invention, both the substituent bonding to the terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group and the atom group existing between the alkylene group and the alkyl group and selected from the group consisting of an amide bond, an ester bond, an N-oxymethyleneamino group, and an N,N'-di(oxymethylene)amino group act as functional groups for adsorbing various organic compounds including alcohols. Herein, the substituent bonding to the terminal of the alkyl group and the atom group existing between the alkylene group and the alkyl group are selected depending to an organic compound to be adsorbed. Herein, since both the substituent bonding to the terminal of the alkyl group and the atom group existing between the alkylene group and the alkyl group can be selected, a layer organic silicic acid for enhancing a particularly high adsorbing power for an identical organic compound (group) can be provided and a layer organic silicic acid having a particularly high adsorbing power for different organic compounds (compound groups) can be provided. That is, according to the layer organic silicic acid according to the third embodiment of the present invention, a layer organic silicic acid of which the selectivity with respect to the adsorption of an objective organic compound is improved can be provided. Also, the substituent and the atom group do not directly bond to a silicon atom of the substituted silyl group, the atom group and the atom group are not shielded by the alkyl group or the alkylene group, and the possibility of interacting an objective organic compound with the substituent and the atom group (adsorbing an objective organic compound on the substituent and the atom group) becomes higher. Therefore, the objective organic compound can be more easily adsorbed on the substituted silyl group. Also, since an objective organic compound can be adsorbed on both the substituent and the atom group, the efficiency of adsorbing the objective organic compound on the substituted silyl group can be enhanced. As a result, a layer organic silicic acid according to the third embodiment of the present invention can more improve the adsorbing power thereof to alcohols and can separate various organic compounds more efficiently.

Additionally, the total of the number of carbon atom(s) contained in one alkyl group bonding to the atom group and the number of carbon atom(s) contained in one alkylene group bonding to a silicon atom of the silyl group is preferably equal to or greater than 3 and equal to or less than 18. Herein, if the total of the number of carbon atom(s) contained in the alkyl group and the number of carbon atom(s) contained in the alkylene group is less than 3, the total length of the alkyl group and alkylene group contained in the substituted silyl group is small and the space between layers of the layer poly(silicic acid) does not sufficiently increase. Accordingly, an organic compound such as alcohols is difficult to enter the space between layers of the layer poly(silicic acid) and an objective organic compound is difficult to sufficiently interact with the substituent and atom group contained in the substituted silyl group. As a result, the objective organic compound is difficult to be sufficiently adsorbed on the substituted silyl group. On the other hand, if the total of the number of carbon atom(s) contained in the alkyl group and the number of carbon atom(s) contained in the alkylene group is greater than 18, the total length of the alkyl group and alkylene group contained in the substituted silyl group is large and the rate of space occupied by one substituted silyl group in the space between layers of the layer poly(silicic acid) becomes higher. Accordingly, the number of substituted silyl group(s) bonding to a layer of the layer poly(silicic acid) decreases. That is, the number of the substituent(s) and atom group(s) contained in the substituted silyl group that interacts with (adsorbs) an objective organic compound in the space between layers of the layer poly(silicic acid) also decreases. Also, the substituent and atom group contained in the substituted silyl group is shielded by the long alkyl chains of the alkyl group and alkylene group and the objective organic compound is difficult to sufficiently interact with the substituent and atom group contained in the substituted silyl group. As a result, the objective organic compound is difficult to be sufficiently adsorbed on the substituted silyl group. That is, the total of the number of carbon atom(s) contained in the one alkyl group and the number of carbon atom(s) contained in the one alkylene group is equal to or greater than 3 and equal to or less than 18, whereby an objective organic compound can efficiently interact with the substituted silyl group and be sufficiently adsorbed on the substituted silyl group.

An example of the layer organic silicic acid according to the third embodiment of the present invention is illustrated in FIG. 3A and FIG. 3B. In FIG. 3A and FIG. 3B, a layer organic poly(silicic acid) is represented by ···-O-Si-O-··· and a silanol group substituted with a substituted silyl group is represented by Si-O-. In FIG. 3A and FIG. 3B, the substituted silyl group has one alkylene group and the alkylene group is represented by one polygonal line wherein the vertexes of the polygonal line represent methylene groups (-CH₂-). That is, the alkylene group in FIG. 3A and FIG. 3B represents a linear pentamethylene group. Herein, an atom group B bonds to the carbon atom at the terminal of the alkylene group and the atom group B is selected from the group consisting of an amide bond, an ester bond, an N-oxymethyleneamino group, and an N,N'-di(oxymethylene)amino group. Also, in FIG. 3A, the atom group B is an amide bond or an ester bond and, in FIG. 3B, the atom group B is an N-oxymethyleneamino group or an N,N'-di(oxymethylene)amino group. Also, in FIG. 3A, the atom group B has one alkyl group and the alkyl group is represented by one polygonal line wherein the vertexes of the polygonal line represent methylene groups (-CH₂-). That is, the alkyl group in FIG. 3A represents a linear pentyl group. On the other hand, in FIG. 3B, the atom group B has two alkyl groups and each of these alkyl groups is represented by a polygonal line wherein the vertexes of the polygonal line represent methylene groups (-CH₂-). That is, each of the two alkyl groups in FIG. 3B represents a linear pentyl group. Also, in FIG. 3A, the carbon atom at the terminal of the alkyl group is substituted with a substituent A and the substituent A is selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group. On the other hand, in FIG. 3B, each of the carbon atoms at the terminals of the two alkyl groups is substituted with a substituent A and the substituent A is selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group. Also, in FIG. 3A and FIG. 3B, the substituted silyl groups have substituents X₁ and X₂ except an alkyl group and each of the substituents X₁ and X₂ is substituted with a substituent selected from the group consisting of a hydroxyl group, a chloro group, a methyl group, an ethyl group, a methoxy group and an ethoxy group or is a single bond to an oxygen atom of another silanol group that is adjacent to the silanol group to which the substituted silyl group bonds.

Additionally, a layer organic silicic acid according to the present invention can be used as a separation medium which can separate a general organic compound, for example, a packing material for chromatography.

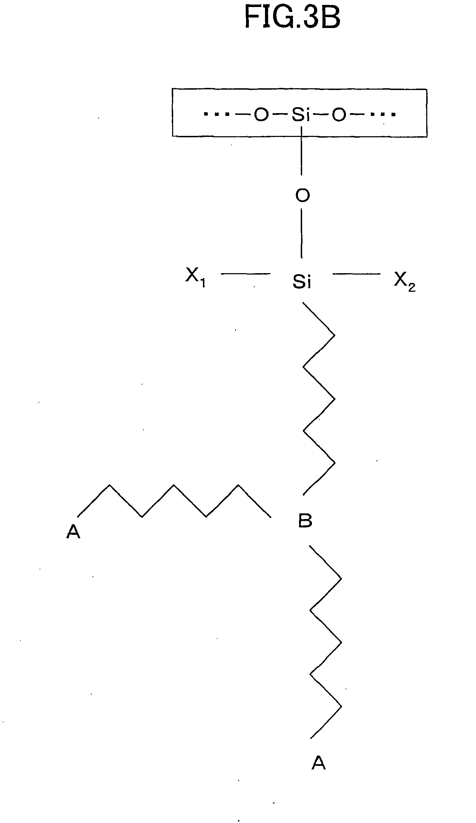

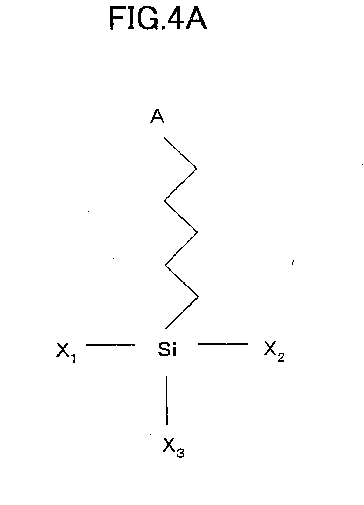

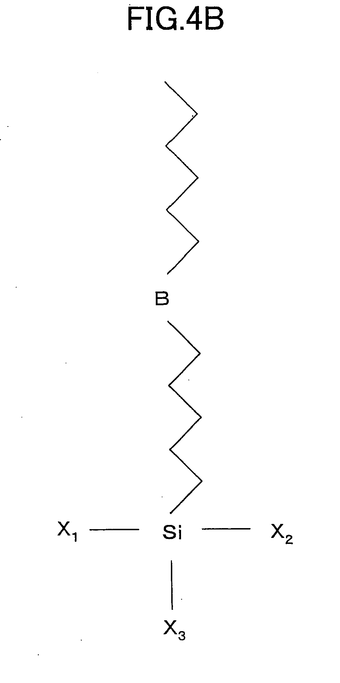

Next, a method of producing a layer organic silicic acid according to the present invention is described with reference to FIG. 4, FIG. 5, and FIG. 6.

First, a commercially available layer polysilicate salt is obtained or a layer polysilicate salt is synthesized by a publicly known method. The layer polysilicate salt used in the method of producing a layer organic silicic acid according to the present invention is a compound having a ≡Si-O⁻ group and a counter ion selected from an Na⁺ and a K⁺ between plural (SiO₂) layers formed by bonding Si and O to each other. As a layer polysilicate salt, specifically, kanemite (NaHSi₂O₅), makatite (NaSi₄O₉·xH₂O), magadiite (Na₂Si₁₄O₂₉·xH₂O), and kenyaite (K₂Si₂₀O₄₁·xH₂O) are provided (x is the number of hydratet water molecule(s)). Among these, a particularly preferable layer polysilicate salt is magadiite.

Next, preferably, the layer polysilicate salt is reacted with a salt selected from the group consisting of quaternary ammonium salts (R₄N⁺X⁻), alkylammonium salts (RNH₃⁺X⁻), and alkylphosphonium salts (R₄P⁺X⁻) so that a cation (an Na⁺, a K⁺) in the layer polysilicate salt is ion-exchanged by an organic ion selected from the group consisting of a quaternary ammonium ion, an alkylammonium ion, and an alkylphosphonium ion. (Herein, R represents a linear alkyl group and X represents a halogen atom.) Thus, the space between layers of the layer polysilicate salt can be increased by ion-exchanging a cation of the layer polysilicate salt with an organic ion described above. Accordingly, reaction of a silane compound described below to the layer polysilicate salt can be accelerated. Additionally, in the method of producing a layer organic silicic acid according to the present invention, it is preferable that a cation of the layer polysilicate salt be ion-exchanged by an alkyltrimethylammonium halide as a quaternary ammonium salt. Since an alkyltrimethylammonium ion originating from the alkyltrimethylammonium halide has the three shorter methyl groups and the one longer alkyl group which groups bond to a nitrogen atom, the space between layers of the layer polysilicate salt is increased by the one longer alkyl group and other three methyl groups do not inhibit the ion exchange by an alkyltrimethylammonium ion and the reaction with a silane compound. Also, commercially available products can be utilized with respect to the salts described above.

Next, the layer polysilicate salt that has been ion-exchanged by the organic cation is silylated with an appropriate silane compound so as to an layer organic silicic acid. Silane compounds for silylating a layer polysilicate salt that has been ion-exchanged by an organic cation are illustrated in FIG. 4A, FIG. 4B, and FIG. 4C.

A silane compound as illustrated in FIG. 4A is used for obtaining a layer organic silicic acid according to the first embodiment of the present invention as described above. That is, the silane compound illustrated in FIG. 4A has at least one (1 or more and 3 or less) alkyl group. That is, at least one of (1 or more and 3 or less) hydrogen atoms of a silane (SiH₄) is replaced by the alkyl group. Also, each alkyl group may be either a linear alkyl group or a branched alkyl group. Specifically, each alkyl group is selected from the group consisting of a methyl group and an ethyl group and, linear and branched, propyl groups, butyl groups, pentyl groups, hexyl groups, heptyl groups, octyl groups, nonyl groups, decyl groups, undecyl groups, dodecyl groups, tridecyl groups, tetradecyl groups, pentadecyl groups, hexadecyl groups, heptadecyl groups, octadecyl groups, nonadecyl groups, and icosyl groups.

Further, each alkyl group has a substituent bonding to a terminal of the alkyl group which terminal is at the apposite side of the silicon atom of the silane compound (a carbon atom at the terminal of the alkyl group is substituted with a substituent), and each substituent is selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

On the other hand, each hydrogen atom of the silane which atom is not replaced by the alkyl group is replaced by a substituent selected from the group consisting of a hydroxyl group, a chloro group, a methyl group, an ethyl group, a methoxy group, and an ethoxy group.

Additionally, the number of carbon atom(s) contained in each alkyl group bonding to a silicon atom of the silyl group is preferably equal to or greater than 3 and equal to or less than 18.

In FIG. 4A, the silane compound has one alkyl group and the alkyl group is represented by one polygonal line wherein the vertexes of the polygonal line represent methylene groups (-CH₂-). That is, the alkyl group in FIG. 4A represents a linear pentyl group. Herein, the carbon atom at the terminal of the alkyl group is substituted with a substituent A and the substituent A is selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group. Also, the silane compound has substituents X₁, X₂, and X₃ except an alkyl group and each of the substituents X₁, X₂, and X₃ is a substituent selected from the group consisting of a hydroxyl group, a chloro group, a methyl group, an ethyl group, a methoxy group and an ethoxy group.

A silane compound as illustrated in FIG. 4B is used for obtaining a layer organic silicic acid according to the second embodiment of the present invention as described above. That is, the silane compound illustrated in FIG. 4B has at least one (1 or more and 3 or less) alkylene group. That is, at least one of (1 or more and 3 or less) hydrogen atoms of a silane (SiH₄) is replaced by the alkylene group. Also, each alkylene group may be either a linear alkylene group or a branched alkylene group. Specifically, each alkylene group is selected from the group consisting of a methylene group and an ethylene group and, linear and branched, trimethylene groups, tetramethylene groups, pentamethylene groups, hexamethylene groups, heptamethylene groups, octamethylene groups, nonamethylene groups, decamethylene groups, undecamethylene groups, dodecamethylene groups, tridecamethylene groups, tetradecamethylene groups, pentadecamethylene groups, hexadecamethylene groups, heptadecamethylene groups, octadecamethylene groups, nonadecamethylene groups, and icosamethylene groups.

Further, each alkylene group has an atom group bonding to a terminal of the alkylene group which terminal is at the opposite side of a silicon atom of the silane compound and each atom group is selected from the group consisting of an amide bond, an ester bond, an N-oxymethyleneamino group (-OCH₂NH-) and an N,N'-di(oxymethylene)amino group ((-OCH₂)₂N-).

Also, the atom group has at least one (one or more and two or less) alkyl group. That is, at least one (one or more and two or less) of the valences of the atom group is substituted with an alkyl group. Also, each alkyl group may be either a linear alkyl group or a branched alkyl group. Specifically, each alkyl group is selected from the group consisting of a methyl group and an ethyl group and, linear and branched, propyl groups, butyl groups, pentyl groups, hexyl groups, heptyl groups, octyl groups, nonyl groups, decyl groups, undecyl groups, dodecyl groups, tridecyl groups, tetradecyl groups, pentadecyl groups, hexadecyl groups, heptadecyl groups, octadecyl groups, nonadecyl groups, and icosyl groups.

Additionally, each of plural valences of the atom group may bond to either the alkyl group or the alkylene group.

On the other hand, each hydrogen atom of the silane which atom is not replaced by the alkylene group is replaced by a substituent selected from the group consisting of a hydroxyl group, a chloro group, a methyl group, an ethyl group, a methoxy group, and an ethoxy group.

Additionally, the total of the number of carbon atom(s) contained in one alkyl group bonding to the atom group and the number of carbon atom(s) contained in one alkylene group bonding to a silicon atom of the silane compound is preferably equal to or greater than 3 and equal to or less than 18.

In FIG. 4B, the silane compound has one alkylene group and the alkylene group is represented by one polygonal line wherein the vertexes of the polygonal line represent methylene groups (-CH₂-). That is, the alkylene group in FIG. 2 represents a linear pentamethylene group. Herein, an atom group B bonds to the carbon atom at the terminal of the alkylene group and the atom group B is selected from the group consisting of an amide bond, an ester bond, an N-oxymethyleneamino group, and an N,N'-di(oxymethylene)amino group. Also, in FIG. 4B, the atom group B has one alkyl group and the alkyl group is represented by one polygonal line wherein the vertexes of the polygonal line represent methylene groups (-CH₂-). That is, the alkyl group in FIG. 4B represents a linear hexyl group. Also, the silane compound has substituents X₁, X₂, and X₃ except an alkyl group and each of the substituents X₁, X₂, and X₃ is a substituent selected from the group consisting of a hydroxyl group, a chloro group, a methyl group, an ethyl group, a methoxy group and an ethoxy group.

For obtaining a layer organic silicic acid according to the second embodiment of the present invention as described above, for example, a silane compound as illustrated in FIG. 4C is used. Now, a silane compound for obtaining a layer organic silicic acid as illustrated in FIG. 3C is illustrated in FIG. 4C and described and, however, a silane compound for obtaining a layer organic silicic acid as illustrated in FIG. 4D is not illustrated but can be also understood similarly.

The silane compound illustrated in FIG. 4C has at least one (1 or more and 3 or less) alkylene group. That is, at least one of (1 or more and 3 or less) hydrogen atoms of a silane (SiH₄) is replaced by the alkylene group. Also, each alkylene group may be either a linear alkylene group or a branched alkylene group. Specifically, each alkylene group is selected from the group consisting of a methylene group and an ethylene group and, linear and branched, trimethylene groups, tetramethylene groups, pentamethylene groups, hexamethylene groups, heptamethylene groups, octamethylene groups, nonamethylene groups, decamethylene groups, undecamethylene groups, dodecamethylene groups, tridecamethylene groups, tetradecamethylene groups, pentadecamethylene groups, hexadecamethylene groups, heptadecamethylene groups, octadecamethylene groups, nonadecamethylene groups, and icosamethylene groups.

Further, each alkylene group has an atom group bonding to a terminal of the alkylene group which terminal is at the opposite side of a silicon atom of the silane compound and each atom group is selected from the group consisting of an amide bond, an ester bond, an N-oxymethyleneamino group (-OCH₂NH-) and an N,N'-di(oxymethylene) amino group ((-OCH₂)₂N-).

Also, the atom group has at least one (one or more and two or less) alkyl group. That is, at least one (one or more and two or less) of the valences of the atom group is substituted with an alkyl group. Also, each alkyl group may be either a linear alkyl group or a branched alkyl group. Specifically, each alkyl group is selected from the group consisting of a methyl group and an ethyl group and, linear and branched, propyl groups, butyl groups, pentyl groups, hexyl groups, heptyl groups, octyl groups, nonyl groups, decyl groups, undecyl groups, dodecyl groups, tridecyl groups, tetradecyl groups, pentadecyl groups, hexadecyl groups, heptadecyl groups, octadecyl groups, nonadecyl groups, and icosyl groups.

Additionally, each of plural valences of the atom group may bond to either the alkyl group or the alkylene group.

Further, each alkyl group has a substituent bonding to a terminal of the alkyl group which terminal is at the apposite side of the atom group (a carbon atom at the terminal of the alkyl group is substituted with a substituent), and each substituent is selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

On the other hand, each hydrogen atom of the silane which atom is not replaced by the alkylene group is replaced by a substituent selected from the group consisting of a hydroxyl group, a chloro group, a methyl group, an ethyl group, a methoxy group, and an ethoxy group.

Additionally, the total of the number of carbon atom(s) contained in one alkyl group bonding to the atom group and the number of carbon atom(s) contained in one alkylene group bonding to a silicon atom of the silane compound is preferably equal to or greater than 3 and equal to or less than 18.

In FIG. 4C, the silane compound has one alkylene group and the alkylene group is represented by one polygonal line wherein the vertexes of the polygonal line represent methylene groups (-CH₂-). That is, the alkylene group in FIG. 4C represents a linear pentamethylene group. Herein, an atom group B bonds to the carbon atom at the terminal of the alkylene group and the atom group B is generally selected from the group consisting of an amide bond, an ester bond, an N-oxymethyleneamino group, and an N,N'-di(oxymethylene)amino group. However, in FIG. 4C, the atom group B is an amide bond or an ester bond. Also, in FIG. 4C, the atom group B has one alkyl group and the alkyl group is represented by one polygonal line wherein the vertexes of the polygonal line represent methylene groups (-CH₂-). That is, the alkyl group in FIG. 3C represents a linear pentyl group. Also, in FIG. 4C, the carbon atom at the terminal of the alkyl group is substituted with a substituent A and the substituent A is selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group. Also, in FIG. 4C, the silane compound has substituents X₁, X₂, and X₃ except an alkyl group and each of the substituents X₁, X₂, and X₃ is a substituent selected from the group consisting of a hydroxyl group, a chloro group, a methyl group, an ethyl group, a methoxy group and an ethoxy group.

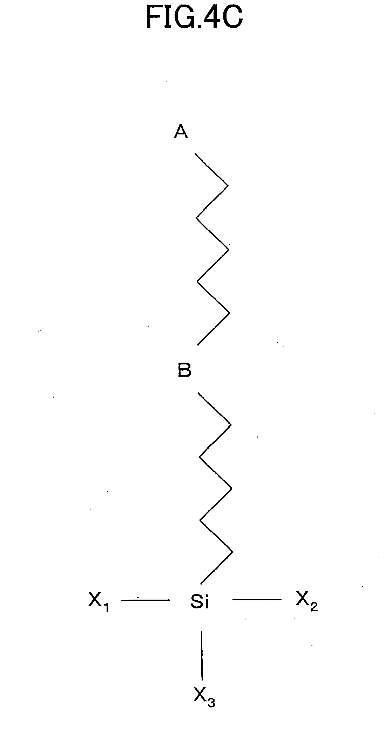

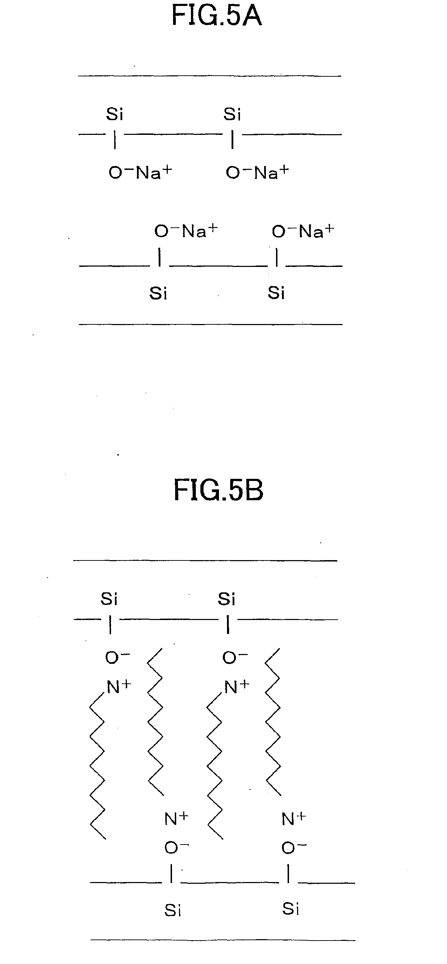

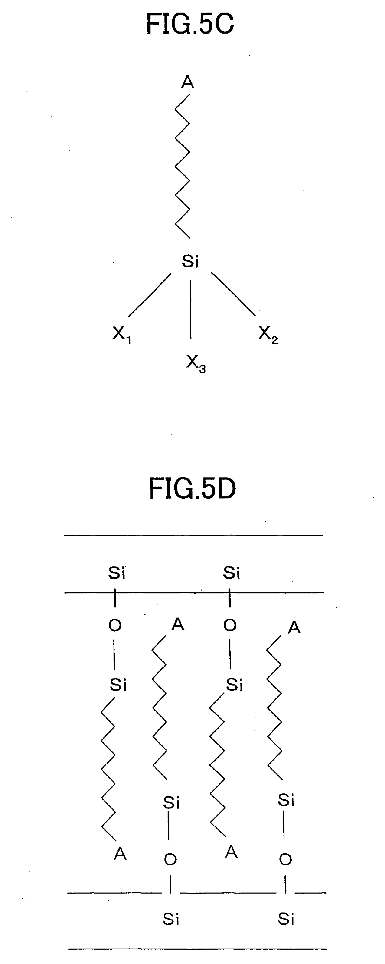

A method of obtaining a layer organic silicic acid using the silane compound described above is described with reference to FIG. 5. In regard to the silane compound, a commercially available product can be obtained or it can be synthesized by a publicly known method. A layer organic silicic acid according to the present invention can be obtained by silylating a Si-O⁻ group of a layer polysilicate salt ion-exchanged by an organic cation with a silane compound as described above. The silylation of a Si-O⁻ group of the layer polysilicate salt ion-exchanged by an organic cation is conducted by utilizing a substituent except alkyl groups or alkylene groups, which bond to the silicon atom of a silane compound as described above, having a high reactivity to a Si-O⁻ group. That is, at least one (1 or more and 3 or less) substituent except an alkyl group or alkylene group bonding to a silicon atom of a silane compound as described above is removed and bonds to an oxygen atom of a Si-O⁻ group, whereby the silylation of the Si-O⁻ group is achieved. Herein, the subsituent except an alkyl group or alkylene group bonding to a silicon atom of a silane compound which substituent has not bonded to an oxygen atom of a Si-O⁻ group remains unreacted or is changed to a hydroxyl group by treatment with water.

For example, after a cation such as an Na⁺ of a layer polysilicate salt as illustrated in FIG. 5A is ion-exchanged by an organic cation such as a quaternary ammonium ion, as schematically illustrated in FIG. 5B, a Si-O⁻ group of the layer polysilicate salt ion-exchanged by the organic cation is silylated with a silane compound as illustrated in FIG. 4A or FIG. 5C. As the Si-O⁻ group of the layer polysilicate salt ion-exchanged by the organic cation is silylated with a silane compound as illustrated in FIG. 4A or FIG. 5C, one of the substituents except an alkylene group which substituents bond to the silicon atom of the silane compound, X₃, bonds to the oxygen atom of the Si-O⁻ group. A layer organic silicic acid obtained through the silylation with a silane compound as illustrated in FIG. 5C is illustrated in FIG. 5D. Substituents X₁ and X₂ except the substituent X₃ which substituents bond to the silicon atom of the silane compound are similarly removed and bond to oxygen atoms of adjacent Si-O⁻ groups, remain unreacted, or is changed to -OH groups by treatment with water. For the simplicity, FIG. 5D is drawn such that Si bonding except an alkylene group having a substituent A and one bonding to the Si-O⁻ group is omitted.

In the method of producing a layer organic silicic acid according to the present invention described above, a desired layer organic silicic acid can be obtained, only by removing an organic ion bonding to a Si-O⁻ group of a layer polysilicate salt and bonding a substituted silyl group derived from a silane compound to an oxygen atom of the Si-O⁻ group. That is, a layer organic silicic acid can be synthesized from a layer polysilicate salt ion-exchanged by an organic cation through a one-step reaction for silylating a Si-O⁻ group of the layer polysilicate salt. Therefore, substituted silyl groups derived from a silane compound uniformly bond to Si-O⁻ groups of a layer polysilicate salt and a layer organic silicic acid can be obtained in which Si-O- groups of the layer polysilicate salt are uniformly silylated with a silane compound.

Additionally, a layer organic silicic acid according to the second embodiment or third embodiment of the present invention can be also synthesized by a method different from the production method described above. The layer organic silicic acid according to the second embodiment or third embodiment of the present invention has an atom group selected from the group consisting of an amide bond, an ester bond, an N-oxynethyleneamino group and an N,N'-di(oxymethylene)amino group, between an alkylene group and alkyl group of a substituted silyl group.

First, for synthesizing a layer organic silicic acid having an amide bond as the atom group, a silane compound illustrated in FIG. 5C is prepared in which a substituent A bonding to the alkylene group is an amino group. Then, a Si-O⁻ group of a layer polysilicate salt ion-exchanged by an organic cation is silylated with the silane compound illustrated in FIG. 5C in which a substituent A bonding to the alkylene group is an amino group, as described above. Next, a suitable compound having a carboxyl group is added to the amino group (substituent A) of the substituted silyl group bonding to the Si-0 group of the layer polysilicate salt so that reaction is caused. Accordingly, the amidation reaction between the amino group of the substituted silyl group and the carboxyl group of the added compound is caused so that a layer organic silicic acid having an amide bond as the atom group can be synthesized.

Also, for synthesizing a layer organic silicic acid having an ester bond as the atom group, a silane compound illustrated in FIG. 5C is prepared in which a substituent A bonding to the alkylene group is a hydroxyl group. Then, a Si-O⁻ group of a layer polysilicate salt ion-exchanged by an organic cation is silylated with the silane compound illustrated in FIG. 5C in which a substituent A bonding to the alkylene group is a hydroxyl group, as described above. Next, a suitable compound having a carboxyl group is added to the hydroxyl group (substituent A) of the substituted silyl group bonding to the Si-O⁻ group of the layer polysilicate salt so that reaction is caused. Accordingly, the esterification reaction between the hydroxyl group of the substituted silyl group and the carboxyl group of the added compound is caused so that a layer organic silicic acid having an ester bond as the atom group can be synthesized.

Further, for synthesizing a layer organic silicic acid having an N-oxymethyleneamino group or an N,N'-di(oxymethylene)amino group as the atom group, a silane compound illustrated in FIG. 5C is prepared in which a substituent A bonding to the alkylene group is an amino group. Then, a Si-O⁻ group of a layer polysilicate salt ion-exchanged by an organic cation is silylated with the silane compound illustrated in FIG. 5C in which a substituent A bonding to the alkylene group is an amino group, as described above. Next, a suitable compound having an epoxyethyl group (an epoxyethylene compound having a substituted or non-substituted alkyl group, etc.) is added to the amino group (substituent A) of the substituted silyl group bonding to the Si-O⁻ group of the layer polysilicate salt so that reaction is caused. Accordingly, the ring-opening reaction of the epoxyethyl group between the amino group of the substituted silyl group and the epoxyethyl group of the added compound is caused. That is, the amino group of the substituted silyl group bonds to a carbon atom of the epoxyethyl group of the added compound (which atom does not bond to a substituted or non-substituted alkyl group, etc.) and the bond between carbon atoms of the epoxyethyl group is broken. Thus, a layer organic silicic acid having an N-oxymethyleneamino group or an N,N'-di(oxymethylene)amino group as the atom group can be synthesized. Additionally, when 1 equivalent amount of a compound having an epoxyethyl group is reacted with an amino group of the substituted silyl group, a layer organic silicic acid having an N-oxymethyleneamino group as the atom group can be obtained and when 2 equivalent amounts of a compound having an epoxyethyl group are reacted with an amino group of the substituted silyl group, a layer organic silicic acid having an N,N'-di(oxymethylene)amino group as the atom group can be obtained.

### [Example 1]

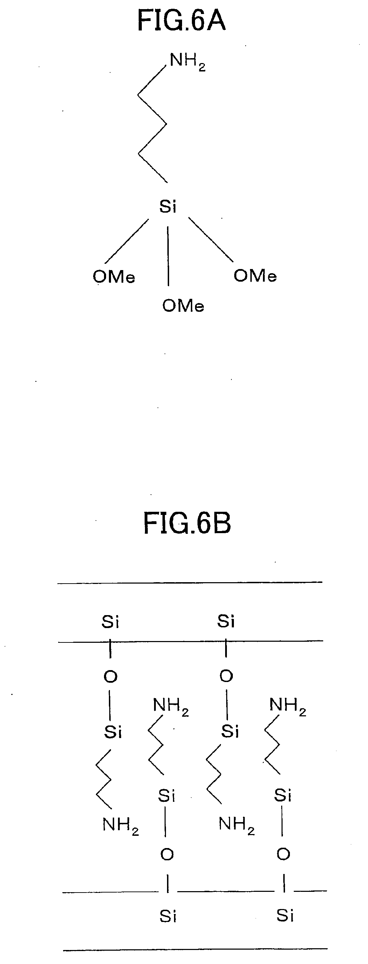

Next, the first example relating to a layer organic silicic acid and method of producing a layer organic silicic acid of the present invention is described with reference to FIG. 6. In the first example of the present invention, the layer organic silicic acid is a layer silicic acid formed by bonding a substituted silyl group having a 3-aminopropyl group to magadiite.

### (a) Synthesis of a clay mineral, magadiite

First, a clay mineral, magadiite, was synthesized as a layer polysilicate salt that is used in the method of producing a layer organic silicic acid of the present invention. Specifically, 57 g of silicate of soda (produced by Fuji Chemical Industry Co., Ltd., No. 3 sodium silicate) which contains 29.17 % of SiO₂ and 9.40 % of Na₂O, 28 g of SiO₂ (Wako Pharmacy), and 215 g of water were placed in a autoclave and hydrothermal synthesis was performed at 150 °C for 48 hours so as to obtain a solid matter. The obtained solid matter was washed with water and dried at 40 °C, so as to obtain magadiite (Na₂Si₁₄O₂₉·xH₂O).

### (b) Cation exchange by an ammonium ion (First process)

10 g of the synthesized magadiite was dispersed in 1000 ml of 0.05 N aqueous solution of octadecyltrimethylammonium chloride and the obtained dispersion liquid was stirred at room temperature for 1 day so that an Na⁺ contained in the magadiite was ion-exchanged by an octadecytrimethylammonium ion. A solid was filtered from the obtained dispersion liquid and the solid was washed with water and dried so as to obtain powder. For the magadiite as a layer silicate salt and the powder obtained by ion exchange, the space (d001) of lattice planes (001) of each crystal was measured by means of X-ray structural diffraction. As a result, it was confirmed that the d001 value increased from 1.5 nm for the magadiite before the ion exchange to 3.2 nm for the powder after the ion exchange.

### (c) Silylation with a silane compound (Second process)

5 g of the powder obtained on the first process (cation exchange by an ammonium ion) was dispersed in 35 g of aqueous solution of isopropanol (isopropanol : water = 1 : 1) so as to obtain a dispersion liquid. 5 g of (3-aminopropyl)trimethoxysilane (produced by Chisso Co., Ltd., Saira Ace S360) was added into the obtained dispersion liquid. FIG. 6A illustrates (3-aminopropyl)trimethoxysilane, wherein Me represents a methyl group. The dispersion liquid in which (3-aminopropyl)trimethoxysilane was added was refluxed so as to cause silylation reaction. After the completion of the silylation reaction, a solid matter was filtered from the dispersion liquid. Subsequently, the obtained solid matter was washed with isopropanol and dried so as to obtain powder. For the obtained powder, the space (d001) of lattice planes (001) of the powder crystal was measured by means of X-ray structural diffraction. As a result, the d001 value was 1.8 nm and decreased between before and after the silylation reaction. Also, the existence of an amino group in the obtained powder was confirmed from the result of infrared spectroscopic analysis for the obtained powder. Thus, the synthesis of a layer organic silicic acid as an objective substance could be confirmed which was formed by bonding a substituted silyl group having a 3-aminopropyl group to magadiite. FIG. 6B is a schematic diagram of the synthesized layer organic silicic acid. Herein, the Si atom of a substituted silyl group bonds to the O atom of a silanol group of the layer silicic acid which group is adjacent to the 0 atom to which the Si atom of the substituted silyl group bonds, bonds to an unreacted MeO group, or bonds to a hydroxyl group obtained by treating a MeO with water, except a 3-aminopropyl group. Further, an acidic protein, albumin, could be separated from an aqueous solution of albumin by using the obtained layer organic silicic acid.

Thus, the embodiment(s) and example(s) of the present invention have been described specifically but the present invention is not limited to the embodiment(s) and the example(s), and the embodiment(s) and example(s) of the present invention can be modified or altered without departing from the spirit and scope of the present invention.

### INDUSTRIAL APPLICABILITY

The present invention can be applied to a layer organic silicic acid that can improve the adsorbing power thereof to alcohols and separate a general organic compound and a method of producing the layer organic silicic acid. For example, a layer organic silicic acid and method of producing a layer organic silicic acid according to the present invention can be applied to a separation medium such as a packing material for chromatography and a method of producing the separation medium. Also, a layer organic silicic acid and method of producing a layer organic silicic acid according to the present invention can be applied to a gelling agent and a method of producing a gelling agent.

## Claims

1. A layer organic silicic acid in which a substituted silyl group bonds to a layer poly(silicic acid), **characterized in that** the substituted silyl group has an alkyl group and the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

2. The layer organic silicic acid as claimed in claim 1, **characterized in that** a number of carbon atom(s) contained in the alkyl group is equal to or greater than 3 and equal to or less than 18.

3. A layer organic silicic acid in which a substituted silyl group bonds to a layer poly(silicic acid), **characterized in that** the substituted silyl group has an alkylene group, the alkylene group has an atom group bonding to the alkylene group and selected from the group consisting of an amide bond, an ester bond, an N-oxynethyleneamino group and an N,N'-di(oxymethylene) amino group, and the atom group has an alkyl group.

4. The layer organic silicic acid as claimed in claim 3, **characterized in that** the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

5. The layer organic silicic acid as claimed in claim 3 or 4, **characterized in that** a total of a number of carbon atom(s) contained in the alkyl group and a number of carbon atom(s) contained in the alkylene group is equal to or greater than 3 and equal to or less than 18.

6. A method of producing a layer organic silicic acid for obtaining an layer organic silicic acid by silylating a layer polysilicate salt with a silane compound, **characterized in that** the silane compound has an alkyl group and the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

7. The method of producing a layer organic silicic acid as claimed in claim 6, **characterized in that** a total of a number of carbon atom(s) contained in the alkyl group and a number of carbon atom(s) contained in the alkylene group is equal to or greater than 3 and equal to or less than 18.

8. A method of producing a layer organic silicic acid for obtaining an layer organic silicic acid by silylating a layer polysilicate salt with a silane compound, **characterized in that** the silane compound has an alkylene group, the alkylene group has an atom group bonding to the alkylene group and selected from the group consisting of an amide bond, an ester bond, an N-oxynethyleneamino group and an N,N'-di(oxymethylene)amino group, and the atom group has an alkyl group.

9. The method of producing a layer organic silicic acid as claimed in claim 8, **characterized in that** the alkyl group has a substituent bonding to a terminal of the alkyl group and selected from the group consisting of an amino group, an epoxyethyl group, an epoxyethyloxy group, a vinyl group, an isopropenyl group, a 1-phenylvinyl group, a 4-vinylphenyl group, an isocyanate group and a hydroxyl group.

10. The method of producing a layer organic silicic acid as claimed in claim 8 or 9, **characterized in that** a total of a number of carbon atom(s) contained in the alkyl group and a number of carbon atom(s) contained in the alkylene group is equal to or greater than 3 and equal to or less than 18.

11. A method of producing a layer organic silicic acid for obtaining a layer organic silicic acid in which a layer polysilicate salt is silylated with a silane compound, **characterized by** comprising a step of silylating a layer polysilicate salt with a silane compound having an alkylene group bonding to an amino group and a step of reacting a compound having a carboxyl group or an epoxyethyl group with the amino group.

12. A method of producing a layer organic silicic acid for obtaining a layer organic silicic acid in which a layer polysilicate salt is silylated with a silane compound, **characterized by** comprising a step of silylating a layer polysilicate salt with a silane compound having an alkylene group bonding to a hydroxyl group and a step of reacting a compound having a carboxyl group with the hydroxyl group.
